(19) Europäisches Patentamt / European Patent Office / Office européen des brevets

(11) **EP 1 464 674 B1**

(12) **EUROPEAN PATENT SPECIFICATION**

(45) Date of publication and mention
of the grant of the patent:
**22.04.2009 Bulletin 2009/17**

(51) Int Cl.:
*C08G 18/79* (2006.01)      *C08J 7/04* (2006.01)
*C09D 175/04* (2006.01)

(21) Application number: **04007337.1**

(22) Date of filing: **26.03.2004**

(54) **Paint film forming method**

Verfahren zur Herstellung eines Lackfilms

Methode de formation d'un film de peinture

(84) Designated Contracting States:
**DE FR GB**

(30) Priority: **28.03.2003   JP 2003089642**

(43) Date of publication of application:
**06.10.2004   Bulletin 2004/41**

(73) Proprietor: **KANSAI PAINT CO., LTD.**
**Amagasaki-shi**
**Hyoko-ken 661-8555 (JP)**

(72) Inventors:
• **Suwama, Masami**
 **Hiratsuka-shi**
 **Kanagawa-ken (JP)**
• **Kato, Atsuya**
 **Hiratsuka-shi**
 **Kanagawa-ken (JP)**

(74) Representative: **Albrecht, Thomas et al**
**Kraus & Weisert**
**Patent- und Rechtsanwälte**
**Thomas-Wimmer-Ring 15**
**80539 München (DE)**

(56) References cited:
**EP-A- 0 320 719        EP-A- 0 653 468**
**EP-A- 0 688 841        EP-A- 1 454 934**
**WO-A-00/37524        WO-A-94/22969**
**WO-A-95/23653        WO-A-97/47700**
**FR-A- 2 828 883**

Remarks:
The file contains technical information submitted after the application was filed and not included in this specification

EP 1 464 674 B1

## Description

## Technical Field

This invention relates to a method of forming paint film excelling in low temperature-curability, adherability and finishing property on rigid resin parts for motor vehicles such as door mirrors, wheel caps, door handles, resin fenders, radiator grilles, aeroparts and the like.

## Background Art

An important performance required for clear paints applied onto parts of motor vehicles made of rigid resin (e.g., ABS resin, PC resin and the like) such as door mirrors, wheel caps, door handles and aeroparts is that they can form paint film of excellent finish appearance associated with leveling property, gloss and sharpness in color.

Paint film excelling in finish performance, paint film performance and paint stability can be provided by clear paint whose chief ingredients are acrylic resin and curing agent such as polyisocyanate and which is currently used for painting said rigid resin parts of motor vehicles.

Whereas, due to energy saving in painting line by low-temperature, short-time baking and productivity improvement by increased conveyer speed, recently the baking conditions (temperature-time) of rigid resin parts have changed to 60-70˚C-10-25 minutes, preferably 65-70˚C-15-20 minutes, from conventional 80-90˚C-40-60 minutes. Hence, development of clear paint which can form paint film showing good tack property (i.e., free of tackiness and does not retain fingerprints of persons who touch the film) after being baked under such conditions and left standing at room temperature and excelling in finish performance, film performance and paint stability is in demand.

Heretofore, a paint comprising non-water-dispersible copolymer-containing liquid and acrylic resin is known (cf. JP 2002-326051A) to be suitable for painting ABS resin material. However, while this paint forms a cured film upon being baked at 75˚C for 30 minutes, it is subject to a problem that it develops a certain defect in either one of the film performance, finish performance and paint stability, when baked at a temperature lower than that for a shorter time.

## Disclosure of the Invention

An object of the present invention is to provide a paint film forming method which can form on rigid resin parts a film excelling in finish performance, film performance and paint stability, by baking at a low temperature for a short time.

We have now discovered that the above object can be accomplished by using a clear paint which contains an acrylic resin obtained by copolymerization of a monomeric mixture having a specific composition and a curing agent at a specific ratio, and come to complete the present invention.

Thus, the present invention provides a paint film forming method comprising applying color base paint onto rigid resin parts and then clear paint and curing the two paint films, which is characterized by using, as said clear paint, a clear paint comprising 60-90% by weight of a hydroxyl-containing acrylic resin (A) and 10-40% by weight of a polyisocyanate compound curing agent (B), based on the combined solid content of the acrylic resin (A) and the curing agent (B), said acrylic resin (A) having a hydroxyl value of 80-160 mgKOH/g and being prepared by radical-copolymerizing based on the combined amount of the monomers (a), (b) and (c): (a) 8-30% by weight of a primary hydroxyl-containing monomer selected from 4-hydroxybutyl (meth)acrylate monomers and ε-caprolactone-modified vinyl monomers obtained by ring-opening polymerization of ε-caprolactone with hydroxyalkyl (meth)acrylate; (b) 10-40% by weight of secondary hydroxyl-containing monomer; and (c) 30-82% by weight of still other polymerizable unsaturated monomer, the clear paint further containing 1-20 % by weight of hydroxyl-containing oligomer (C) which is a reaction product of a carboxyl-containing compound with an epoxy-containing compound, which has at least the hydroxyl group(s) formed by ring-opening esterification reaction between the carboxyl group(s) of the carboxyl-containing compound and the epoxy group(s) of the epoxy-containing compound used in the reaction, and which has at least two hydroxyl groups per molecule and a weight average molecular weight within a range not higher than 1,000, based on the combined solid content of the acrylic resin (A) and the curing agent (B).

Said clear paint excels in low temperature-curability and, according to the present invention, can form paint film excelling in finish performance, film performance and paint stability on rigid resin parts, upon baking at a low temperature for a short time.

Hereinafter the method of the present invention is explained in further details.

## Objects to be painted

The articles to be painted, i.e., the objects to which the method of this invention is to be applied, are parts of motor vehicles such as door mirrors, wheel caps, door handles, aeroparts and the like which are made of rigid resins such as acrylonitrile/butadiene/styrene resin (ABS resin) or polycarbonate resin (PC resin).

According to the method of the present invention, these rigid resin-made parts are painted with color base paint and thereafter with clear paint.

Color base paint

Color base paint is applied onto said rigid resin-made parts prior to application of clear paint, and as such, per se known color base paint having good adherability to rigid resin can be used. Specifically, for example, one-package color base paint comprising polyester polyol having a hydroxyl value of 40-120 and aliphatic and/or alicyclic blocked polyisocyanate which is formed by blocking hydroxy compound-modified isocyanurate type polyisocyanate with dialkyl malonate and acetoacetic acid ester can be used.

As the polyester polyol, a hydroxyl-containing polyester resin having a static glass transition temperature of -80 - 0°C, preferably -65 - -20°C and a hydroxyl value of 40-120 mgKOH/g, preferably 60-100 mgKOH/g is suitable. Static glass transition temperature as referred to herein is the temperature of the first transition point in the low temperature side baseline, when a sample is taken into a measuring cup, completely removed of the solvent therein by vacuum suction and calorimetric change within a range of -100°C - +100°C is measured at a temperature rise rate of 3°C/min. using, for example, a differential scanning calorimeter, DSC-50Q™ Model (Shimadzu Seisakujo).

Such polyester polyol can be prepared, for example, by subjecting polybasic acid and polyhydric alcohol to an esterification reaction under a condition of hydroxyl excess, following a method known per se. Polybasic acid is a compound having at least two carboxyl groups per molecule, examples of which include phthalic, isophthalic, terephthalic, tetrahydrophthalic, hexahydrophthalic, pyromellitic, itaconic, adipic, sebacic, azelaic, Himic®, succinic and HET acids, and anhydrides thereof. Polyhydric alconol is a compound having at least two hydroxyl groups per molecule, examples of which include ethylene glycol, diethylene glycol, triethylene glycol, propylene glycol, neopentyl glycol, butylene glycol, hexanediol, trimethylolethane, trimethylolpropane, pentaerythritol, dipentaerythritol and sorbitol. Introduction of hydroxyl groups into a polyester can be conducted by, for example, concurrent use of polyhydric alcohol having at least three hydroxyl groups per molecule. Static glass transition temperature of such polyester polyol can be optionally adjusted by varying kinds and use ratios of these polybasic acids and polyhydric alcohols.

Said aliphatic and/or alicyclic blocked polyisocyanate, which is used as the curing agent, is formed by blocking hydroxy compound-modified isocyanurate type polyisocyanate with dialkyl malonate and acetoacetic acid ester. The modification of isocyanurate-type polyisocyanate with hydroxy compound signifies an urethanation reaction between isocyanate groups and hydroxyl groups, which can be conducted either before or after isocyanuration of the polyisocyanate. In particular, it is preferred to carry it out before the isocyanuration.

As the polyisocyanate compounds to be isocyanurated, aliphatic or alicyclic diisocyanate compounds having two isocyanate groups per molecule are preferred, examples of which include tetramethylene diisocyanate, pentamethylene diisocyanate, hexamethylene diisocyanate, trimethylhexamethylene diisocyanate, lysine diisocyanate, isophorone diisocyanate, bis(isocyanatomethyl)cyclohexane and dicyclohexylmethane diisocyanate. Of these, hexamethylene diisocyanate and isophorone diisocyanate are particularly preferred because they contribute to give paint film of excellent weatherability.

Hydroxy compounds to be used for the modification are the compounds having one, two or more hydroxyl groups per molecule, examples of which include monohydric alcohols such as methanol, ethanol, isopropanol and phenol; dihydric alcohols such as ethylene glycol, propylene glycol, butanediol, pentanediol, hexanediol, cyclohexanediol, dimethylolcyclohexane, neopentyl glycol and trimethylpentanediol; polyhydric alcohols such as trimethylolpropane, glycerine and pentaerythritol; and hydroxyl-containing resins such as hydroxyl-containing acrylic resins, hydroxyl-containing polyester resins and hydroxyl-containing polyether resins.

Suitable use rate of said hydroxy compound is such that makes the ratio of hydroxyl groups to isocyanate groups fall within a range of 0.1-20 equivalent%, preferably 0.5-15 equivalent%, inter alia, 1-10 equivalent%.

The urethanation reaction can be conducted by a method known per se, in the presence of a catalyst. Examples of useful catalyst include hydroxides or organic acid salts of tetraalkylammonium such as tetramethylammonium, tetraethylammonium and tetrabutylammonium; hydroxides or organic acid salts of hydroxyalkylammonium such as trimethylhydroxyethylammonium, trimethylhydroxypropylammonium, triethylhydroxyethylammonium and triethylhydroxypropylammonium; alkali metal salts of alkylcarboxylic acids such as acetic acid, caproic acid, octylic acid and myristic acid; salts of said alkylcarboxylic acids with such metals as tin, zinc and lead; and aminosilyl-containing compounds such as hexamethylenedisilazane. These catalysts can normally be used at a concentration level in the isocyanate compound used, within a range of 10 ppm-1% by weight.

The urethanation reaction can be conducted in the presence or absence of organic solvent. As the organic solvent, optional solvent which is inert to isocyanate group can be used. The reaction temperature normally is within a range of 20-160°C, preferably 40-130°C. When the reaction reaches the termination point, preferably it is stopped by deactivating the catalyst with, for example, sulfonic acid, phosphoric acid and the like. After the reaction, the unreacted materials and organic solvent are eliminated to provide the intended hydroxyl compound-modified isocyanurate type polyisocyanate.

Thus obtained isocyanurate type polyisocyanate which is modified with hydroxy compound is then blocked by concurrent use of dialkyl malonate and acetoacetic acid ester.

As dialkyl malonate, for example, dimethyl malonate, diethyl malonate, diisopropyl malonate, di-n-butyl malonate, diethyl methylmalonate, benzylmethyl malonate and diphenyl malonate can be named, and as acetoacetic acid ester, for example, methyl acetoacetate, ethyl acetoacetate, isopropyl acetoacetate, n-propyl acetoacetate, benzyl acetoacetate and phenyl acetoacetate can be named. It is generally suitable to use 30-90 equivalent%, in particular, 50-80 equivalent%, of dialkyl malonate; and 10-70 equivalent%, in particular, 20-50 equivalent%, of acetoacetic acid ester; both to the isocyanate groups. It is permissible to use, besides these two blocking agents, other blocking agent (s) derived from, for example, alcohol, phenol, oxime, amine, acid amide, imidazole, pyridine, mercaptane or the like, within a range not higher than 20 equivalent% to the isocyanate groups. Blocking reaction of the isocyanate groups can be conducted by a method known per se.

Color base paint which can be conveniently used in the present invention is such one-package type color base paint comprising the polyester polyol and blocked polyisocyanate which are obtained in the above-described manner. Generally suitable ratio between the two components is: per 100 parts by weight of the polyester polyol, 10-50 parts by weight, in particular, 25-40 parts by weight, of the blocked polyisocyanate.

Such color base paint can be formulated by incorporating coloring pigment into above-described polyester polyol and blocked polyisocyanate, and dissolving or dispersing the blend in organic solvent and/or water. Where necessary, additives for paints such as extender, catalyst or the like may further be added.

As the coloring pigments, for example, solid color pigments such as titanium dioxide, carbon black, chrome yellow, yellow ocher, yellow iron oxide, Hansa yellow, pigment yellow, chrome orange, chrome vermilion, permanent orange, amber, permanent red, brilliant carmine, fast violet, methyl violet lake, ultramarine blue, iron blue, cobalt blue, phthalocyanine blue, pigment green and naphthol green; metallic pigments such as aluminum powder, vapor deposited aluminum, aluminum oxide bronz powder, copper powder, tin powder and micaceous iron oxide; and iridescent pigments such as titanium oxide- or iron oxide-coated mica flakes and mica flakes can be named, but of course useful pigments are not limited to these named above. They can be used each alone or in combination of two or more, to provide solid color paint, metallic paint and iridescent paint.

Color base paint can be applied onto rigid resin-made parts, by adjusting its viscosity to 12-15 seconds/Ford cup #4/20°C, and applying it by such method as air spraying, airless spraying, electrostatic spraying or dipping. Thickness of the paint film is variable according to the kind of rigid resin-made parts to be painted, while generally adequate range is 10-40 $\mu$m, in particular, 15-25 $\mu$m, based on the cured paint film.

Coated film of the color base paint can be cured where necessary, normally by heating at temperatures of 60-100°C, preferably 70-90°C, for about 5-40 minutes, preferably about 15-30 minutes.

Clear paint

Clear paint to be applied onto the coated surfaces with color base paint according to the method of this invention comprises hydroxyl-containing acrylic resin (A), curing agent (B) and an oligomer (C) as essential ingredients. Hereinafter these ingredients are explained in further details.

Hydroxyl-containing acrylic resin (A):

Hydroxyl-containing acrylic resin (A) is an acrylic resin having a hydroxyl value of 80-160 mgKOH/g, which is obtained by radical copolymerization of

   (a) 8-30 wt% of a primary hydroxyl-containing monomer selected from 4-hydroxybutyl (meth)acrylate monomer and ε-caprolactone-modified vinyl monomer obtained by ring-opening polymerization of hydroxyalkyl (meth)acrylate with ε-caprolactone,
   (b) 10-40 wt% of a secondary hydroxyl-containing monomer, and
   (c) 30-82 wt% of other polymerizable unsaturated monomer.

Said ε-caprolactone-modified vinyl monomer useful as above monomer (a) component is obtained by ring-opening polymerization of hydroxyalkyl (meth)acrylate with ε-caprolactone, which includes those represented by the following formula (I):

$$CH_2 = C(R^1)\text{-}COO\text{-}R^2\text{-}O(COC_5H_{10}O)nH \qquad \text{(I)}$$

wherein

$R^1$ is hydrogen or methyl,
$R^2$ is $C_2$-$C_6$, in particular, $C_2$-$C_3$ alkylene, and
n is an integer of 1-10, preferably 1-5.

In particular, these monomers of above (I) in which $R^1$ is hydrogen and $R^2$ is ethylene are preferred. Such ε-caprolactone-modified vinyl monomers are known per se, and as their commercialized products, for example, PLACCEL™ FA-1, PLACCEL™ FA-2, PLACCEL™ FA-3, PLACCEL™ FA-4, PLACCEL™ FA-5, PLACCEL™ FM-1, PLACCEL™ FM-2, PLACCEL™ FM-3, PLACCEL™ FM-4 and PLACCEL™ FM-5 (Daicel Chemical Industries, Ltd.) can be named.

As primary hydroxyl-containing monomer (a), either 4-hydroxybutyl (meth)acrylate monomer or ε-caprolactone-modified vinyl monomer can be used alone, or they may be used in combination.

Such monomer (a) component improves reactivity of resultant hydroxyl-containing acrylic resin (A) with curing agent (B) and contributes to low temperature curability of the paint film.

As examples of secondary hydroxyl-containing monomer (b), hydroxyalkyl (meth)acrylate whose alkyl moiety has 3-6, in particular, 3 or 4, carbon atoms, such as 2-hydroxypropyl (meth)acrylate, 2-hydroxybutyl (meth)acrylate and 3-hydroxybutyl (meth)acrylate; and adducts of (meth)acrylic acid with epoxy-containing compound (e.g., Cardula™ E10, Yuka Shell Epoxy Co.) can be named, 2-hydroxypropyl (meth)acrylate being particularly preferred.

Secondary hydroxyl groups in these monomer (b) component contribute to improve adherability of resulting paint to the color base paint coating.

Other polymerizable unsaturated monomer (c) is any of those copolymerizable with said monomer (a) and/or monomer (b), specific examples including vinyl aromatic compounds such as styrene, α-methylstyrene, vinyltoluene and p-chlorostyrene; $C_1$-$C_{24}$, in particular, $C_1$-$C_{18}$, alkyl esters or cycloalkyl esters of (meth)acrylic acid such as methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, tert-butyl (meth)acrylate, hexyl (meth)acrylate, 2-ethylhexyl (meth)acrylate, n-octyl (meth)acrylate, decyl (meth)acrylate, lauryl (meth)acrylate, stearyl (meth)acrylate and cyclohexyl (meth)acrylate; $C_2$-$C_{18}$ alkoxyalkyl esters of (meth)acrylic acid such as methoxybutyl (meth)acrylate, methoxyethyl (meth)acrylate and ethoxybutyl (meth)acrylate; amino-containing acrylic monomers such as N,N-dimethylaminoethyl (meth)acrylate, N,N-diethylaminoethyl (meth)acrylate, N,N-dimethylaminopropyl (meth)acrylate, N,N-di-t-butylaminoethyl (meth)acrylate and N,N-dimethylaminopropyl (meth)acrylic amide; carboxyl-containing acrylic monomers such as (meth)acrylic acid, crotonic acid, itaconic acid, maleic acid and fumaric acid; and poly-unsaturated acrylic monomers such as ethylene glycol di(meth)acrylate, diethylene glycol di(meth)acrylate, triethylene glycol di(meth)acrylate, tetraethylene glycol di(meth)acrylate, 1,3-butylene glycol di(meth)acrylate, 1,4-butanediol diacrylate, glycerine di(meth)acrylate,, glycerin tri(meth)acrylate, trimethylolpropane di(meth)acrylate, trimethylolpropane tri(meth)acrylate, pentaerythritol di(meth)acrylate, pentaerythritol tri(meth)acrylate, pentaerythritol tetra(meth)acrylate, dipentaerythritol penta(meth)acrylate, hydroxyisocyanurate tri-(meth)acrylate, neopentylglycol diacrylate, 1,6-hexanediol diacrylate, glycerolallyloxy di(meth)acrylate, 1,1,1-tris(hydroxymethyl)ethane di(meth)acrylate, 1,1,1-tris(hydroxymethyl)ethane tri(meth)acrylate, 2-hydroxyethyl (meth)acrylate, 2-hydroxypropyl (meth)acrylate, 3-hydroxypropyl (meth)acrylate and 4-hydroxybutyl (meth)acrylate. Of these, particularly styrene, alkyl esters of (meth)acrylic acid and (meth)acrylic acid are preferred. They can be used each alone or in combination, according to the characteristic properties desired for individual hydroxyl-containing acrylic resin (A).

Said hydroxyl-containing acrylic resin (A) can be prepared by radical copolymerizing above-described primary hydroxyl-containing monomer (a), secondary hydroxyl-containing monomer (b) and other polymerizable unsaturated monomer (c), following a radical polymerization method known per se, for example, in the presence of a polymerization initiator, in an atmosphere of an inert gas such as gaseous nitrogen, at about 50˚C-about 300˚C, preferably at about 60˚C-about 250˚C, in an organic solvent, for about 1-about 24 hours, preferably for about 2-about 10 hours.

The use rates of the monomers in that occasion are as follows, based on the combined amount of the monomers (a), (b) and (c):

monomer (a): 8-30 wt%, preferably 10-25 wt%, inter alia, 15-20 wt%
monomer (b): 10-40 wt%, preferably 15-35 wt%, inter alia, 20-30 wt%
monomer (c): 30-82 wt%, preferably 40-75 wt%, inter alia, 50-65 wt%.

Where monomer (a) is less than 8 wt%, the resulting clear paint exhibits insufficient low temperature curability. Whereas, when it exceeds 30 wt%, paint stability of the clear paint might be impaired. Also when monomer (b) is less than 10 wt%, the clear paint has insufficient adherability, and when it exceeds 40 wt%, stability of the clear paint might be impaired.

As examples of the polymerization initiator, benzoyl peroxide, di-tert-butylhydroperoxide, azobisdimethylvaleronitrile and azobisisobutyronitrile can be named. As examples of the organic solvent to be used for the radical polymerization reaction, aromatic hydrocarbon solvents such as toluene and xylene; ketone solvents such as methyl isobutyl ketone and cyclohexanone; and alcohol solvents such as n-butanol, ethyl cellosolve, butyl cellosolve, methoxypropanol and diethylene glycol monobutyl ether can be named. These organic solvents can be used each alone or more than one of them can be used in combination.

Thus obtained hydroxyl-containing acrylic resin (A) can have a hydroxyl value within a range of 80-160 mg-KOH/g, preferably 90-150 mgKOH/g, inter alia, 100-140 mgKOH/g. Said hydroxyl-containing acrylic resin (A) generally desirably has an weight-average molecular weight within a range of 5,000-20,000, preferably 7,500-17,500, inter alia, 10,000-15,000; and an acid value within a range of 0-40 mgKOH/g, preferably 0.5-30 mgKOH/g, inter alia, 1-20 mgKOH/g.

Curing agent (B):

Curing agent (B) which is used for the clear paint according to the invention is a compound capable of reacting with the hydroxyl groups in said hydroxyl-containing acrylic resin (A) to cure the same acrylic resin (A), and polyisocyanate compound is used.

As examples of the polyisocyanate compound, aliphatic diisocyanates such as hexamethylene diisocyanate and trimethylhexamethylene diisocyanate; alicyclic diisocyanates such as hydrogenated xylylene diisocyanate and isophorone diisocyanate; aromatic diisocyanates such as tolylene diisocyanate and 4,4'-diphenylmethane diisocyanate; polyisocyanate compounds having at least 3 isocyanate groups such as triphenylmethane-4,4',4"-triisocyanate, 1,3,5-triisocyanatobenzene, 2,4,6-triisocyanatotoluene and 4,4'-dimethyldiphenylmethane-2,2',5,5'-tetraisocyanate; adducts of these organopolyisocyanates with polyhydric alcohols, low molecular weight polyester resins or water; cyclized polymers of organopolyisocyanates as above-named or isocyanate-biuret can be named.

As these polyisocyanate compounds, commercialized products such as Burnock™ D-750, Burnock™ D-800, Burnock™ DN-950, Burnock™ DN-970 and Burnock™ DN-15-455 (Dainippon Ink & Chemicals, Inc.); Desmodur™ L, Desmodur™ N, Desmodur™ HL, Desmodur™ 3200, Desmodur™ 3300 and Desmodur™ 3500 (Sumika Bayer Urethane Co.); Takenate™ D-102, Takenate™-202, Takenate™-110, Takenate™-123N, Takenate™-140N, Takenate™-160N, Takenate™-165N and Takenate™-170N (Mitsui Takeda Chemicals, Inc.); Coronet™ EH, Coronet™ L, Coronet™ HL and Coronet™ 203 (Nippon Polyurethane Industry Co., Ltd.); and Duranate™ 24A-90CX (Asahi Kasei Chemicals Corporation) can be used.

In these polyisocyanate compounds, isocyanate groups may be blocked. As blocking agent for that purpose, for example, oxime, phenol, alcohol, lactam, malonic acid ester, mercaptane and the like can be named. As blocked polyisocyanate compounds, those available in the market can be used, typical products being, for example, Burnock™ D-550 (Dainippon Ink & Chemicals, Inc.), Takenate™ B-815-N (Mitsui Takeda Chemicals, Inc.), Additol™ VXL-80 (Hoechst AG, Germany), Coronet™ 2507 (Nippon Polyurethane Industry Co., Ltd.) and Desmodur™ N3500 (Sumika Bayer Urethane Co., Ltd.).

Clear Paint:

The clear paint to be applied onto the paint film of earlier described color base paint according to the present invention comprises the above-described hydroxyl-containing acrylic resin (A) and curing agent (B), the blend ratio of the acrylic resin (A) and the curing agent (B) being, based on the total solid content of said two ingredients, 60-90 wt%, preferably 65-85 wt%, inter alia, 70-80 wt%, of the acrylic resin (A) and 10-40 wt%, preferably 15-35 wt%, inter alia, 20-30 wt%, of the curing agent,
said acrylic resin (A) having a hydroxyl value of 80-160 mgKOH/g and being prepared by radical-copolymerizing, based on the combined amount of the monomers (a), (b) and (c): (a) 8-30% by weight of a primary hydroxyl-containing monomer selected from 4-hydroxybutyl (meth)acrylate monomers and ε-caprolactone-modified vinyl monomers obtained by ring-opening polymerization of ε-caprolactone with hydroxyalkyl (meth)acrylate; (b) 10-40% by weight of secondary hydroxyl-containing monomer; and (c) 30-82% by weight of still other polymerizable unsaturated monomer, the clear paint further containing 1-20 % by weight of hydroxyl-containing oligomer (C) which is a reaction product of a carboxyl-containing compound with an epoxy-containing compound, which has at least the hydroxyl group(s) formed by ring-opening esterification reaction between the carboxyl group(s) of the carboxyl-containing compound and the epoxy group(s) of the epoxy-containing compound used in the reaction, and which has at least two hydroxyl groups per molecule and a weight average molecular weight within a range not higher than 1,000, based on the combined solid content of the acrylic resin (A) and the curing agent (B).

Into the clear paint the hydroxyl-containing oligomer (C) is incorporated, to improve leveling property and adherability of the paint film.

Said hydroxyl-containing oligomer (C) is the reaction product of a carboxyl-containing compound with an epoxy-containing compound, which have at least the hydroxyl group(s) formed by ring-opening esterification reaction between the carboxyl group(s) of the carboxyl-containing compound and the epoxy group(s) of the epoxy-containing compound used in the reaction.

"Carboxyl-containing compound" is a compound having one, two or more carboxyl groups per molecule, of which examples include monocarboxylic acids such as acetic acid, propionic acid, butyric acid, 2-ethylhexanoic acid, octanoic acid, dodecanoic acid, palmitic acid, stearic acid, oleic acid, pivalic acid, versatic acid and benzoic acid; polycarboxylic acids such as succinic acid, adipic acid, azelaic acid, sebacic acid, dodecanedioic acid, tetrahydrophthalic acid, phthalic acid, butanetricarboxylic acid, butanetetracarboxylic acid and anhydrous trimellitic acid; and hydroxy acids such as glycolic acid, lactic acid, malic acid, citric acid, tartaric acid, hydroxypivalic acid, dimethylolpropionic acid, dimethylol butanoic acid and gluconic acid. Anhydrides of these acids also are useful, or reaction products of the anhydrides with glycols can be utilized. Specific examples include reaction product of trimethylolpropane with hexahydrophthalic anhydride or that of trimethylolpropane with succinic anhydride. Of these, hydroxy acids or reaction products of the anhydrides with glycols, in which hydroxyl groups and carboxyl groups are concurrently present, are preferred. Their use enables introduction of many hydroxyl groups into said oligomer (C). In particular, hydroxy acids are advantageous.

An "epoxy-containing compound" contains one, two or more epoxy groups per molecule, and such compounds known per se can be used. For example, (a) glycidol, (b) epoxy-containing compounds obtained by etherification reaction of hydroxyl-containing compounds with epihalohydrin, (c) epoxy-containing compounds obtained by esterification reaction of carboxyl-containing compounds with epihalohydrin, and (d) epoxy-containing compounds obtained by reaction of unsaturated groups with peroxide, can be named. Glycidol (a) is 2,3-epoxy-1-propanol, which can be obtained, for example, by reaction of allyl alcohol with benzoic or tungstic acid, and hydrogen peroxide.

Examples of the hydroxyl-containing compounds used for preparation of said epoxy-containing compounds (b) include: aromatic hydroxyl-containing compounds such as phenol, bis-phenol A, bis-phenol F, phenol-novolak resin, orthocresol-novolak resin and bromides of the foregoing; alicyclic hydroxyl-containing compounds such as hydrogenated bis-phenol A; $C_1$-$C_{20}$ aliphatic monohydric alcohols such as methanol and ethanol; and $C_2$-$C_{20}$ aliphatic polyols such as ethylene glycol, propylene glycol, hexanediol, diethylene glycol, neopentyl glycol, glycerine, trimethylolpropane, pentaerythritol and dipentaerythritol. As epihalohydrins, epichlorohydrin can be favorably used. The etherification reaction of those hydroxyl-containing compounds with epihalohydrin can be conducted by a method known per se. As commercially available products corresponding to the epoxy-containing compound (b), for example, Denacol™ EX-313, Denacol™ EX-321, Denacol™ EX-421 and Denacol™ EX-611 (Nagase Industries) can be named.

As carboxyl-containing compounds useful for preparing the epoxy-containing compound (c), for example, those carboxyl-containing compounds exemplified in connection with preparation of the acrylic resin (A) can be favorably used. The esterification reaction of such carboxyl-containing compounds with epihalohydrin such as epichlorohydrin can be conducted by a method known per se. As commercially available products corresponding to the epoxy-containing compound (c), for example, Cardula™ E10 (Yuka Shell Epoxy Co.), Glydexx™ N10 (Exxon) and Araldite™ PT910 (Ciba Geigy Co.) can be named.

As commercially available products corresponding to the epoxy-containing compound (d), for example, Celloxide™ 2021 and Celloxide™ 3000 (Daicel Chemical Industries, Ltd.) can be named.

Of these epoxy-containing compounds, glycidyl esters having hydrophobic groups can be used with particular advantage.

While the ring-opening esterification reaction of above-described carboxyl-containing compounds with epoxy-containing compounds can be conducted at room temperature, it is normally preferred to carry it out under heating to, for example, 100-160˚C, in particular, 115-150˚C, in the absence of catalyst.

Thus obtained oligomer (C) has at least two hydroxyl groups per molecule, and generally has a hydroxyl value within a range of 200-800 mgKOH/g, preferably 250-700 mgKOH/g, inter alia, 300-600 mgKOH/g, and a weight-average molecular weight within a range not higher than 1,000, preferably 200-850, inter alia, 300-700.

Such a hydroxyl-containing oligomer (C) is used within a range of 1-20 wt%, preferably 3-18 wt%, inter alia, 5-15 wt%, based on the total solid content of the acrylic resin (A) and the curing agent (B).

With the clear paint, still other ingredients may be incorporated where necessary, such as modifying resin, e.g., ordinary acrylic resin, polyester resin, urethane resin and alkyd resin; additives to paint such as ultraviolet absorber, photostabilizer, surface regulating agent and antisetting agent; pigment of an amount not substantially impairing transparency of the paint film, e.g., coloring pigment, metallic pigment and iridescent pigment; and catalyst such as organometallic compound, e.g., tin octylate, dibutyltin di(2-ethylhexanotate), dioctyltin di(2-ethylhexanoate), dioctyltin diacetate, dibutyltin dilaurate, dibutyltin oxide, monobutyltin trioctate, lead 2-ethylhexanoate, zinc octylate and calcium octylate, acid, e.g., p-toluenesulfonic acid, dodecylbenzenesulfonic acid, dinonylnaphthalenesulfonic acid, butylphosphoric acid and octylphosphoric acid, and their amine neutralized products.

Where free polyisocyanate compound is used as the curing agent (B) in the clear paint, there is a possibility that the hydroxyl groups of the acrylic resin (A) and the isocyanate groups in the polyisocyanate compound react to form a gel, and preferably these two components should be separately kept as two-component type package, particularly when their storage time is going to be prolonged over many hours, so that they are mixed immediately before use of the paint.

The clear paint is applicable onto cured or uncured base color paint-applied surface, after being adjusted of its viscosity to 14-20 seconds/Ford cup #4/20˚C, by such means as air spraying, airless spraying, electrostatic finishing or dipping. The thickness of the applied paint film is not subject to strict limitation, but is variable depending on the kind of the object rigid resin-made parts or else, but generally adequate range is 15-80 μm, in particular, 20-40 μm.

The clear paint can be applied onto rigid resin-made parts which have been coated with color base paint as earlier described, the coating being optionally given a setting treatment at room temperature and left uncured or being cured as earlier described, and then baked. Thus a multi-layered paint film can be formed by 2 coat 1 bake system or 2 coat 2 bake system.

The coating film of the clear paint can be substantially completely cured by baking at such low temperatures and short time as 60-70˚C/10-25 minutes, preferably 65-70˚C/15-20 minutes.

Thus, according to the method of the present invention, a multi-layered paint film can be formed on rigid resin-made parts without causing any thermal deformation or deterioration of the painted objects. Furthermore, the baked and cured paint film leaves no trace thereon even when a person holds it immediately after its curing. The film also is resistant to scars or dents which are apt to be incurred during packing and excels in paint workability.

In the above described method of the present invention, the paint film formed of the clear paint comprising the specific hydroxyl-containing acrylic resin (A) excels in paint stability, low temperature curability and adherability, and its cured film can be readily formed under such low temperature and short time baking conditions as, for example, 60-70˚C/10-25 minutes, preferably 65-70˚C/15-20 minutes. Furthermore, the clear paint following the present invention is free of tackiness (a property of giving tackiness-free painted surface which does not retain fingerprints of a person who touches it). When allowed to stand at room temperature for only 30 minutes, the painted surface exhibits such effects that it does not retain traces of gloves or packing materials used during handling of the painted parts and excels also in polishability when refuse or dust lay on the surface.

According to the method of the present invention, therefore, reduction in energy consumption by painting line or productivity improvement by increased conveyer running speed can be accomplished.

Examples

Hereinafter the invention is more specifically explained, referring to working examples, it being understood that the invention is in no way thereby limited. In the following examples, parts and percentages are by weight.

Production Example 1:

Production of acrylic resin No. 1

A reactor equipped with a stirrer, cooler, temperature-regulator, nitrogen inlet pipe and a dropping funnel was charged with 45 parts of an organic solvent, and the inside atmosphere was replaced with nitrogen. The content was heated under stirring until the inside temperature reached 130˚C. Then a monomeric mixture of the following composition was added dropwise, consuming 3 hours.

|  | Parts |
| --- | --- |
| 4-Hydroxybutyl acrylate | 5 |
| ε-Caprolactone-modified vinyl monomer | 15 |
| 2-Hydroxypropyl acylate | 5 |
| 2-Hydroxypropyl methacrylate | 15 |
| Styrene | 25 |
| Methyl methacrylate | 10 |
| Isobutyl methacrylate | 18 |
| n-Butyl acrylate | 5 |
| Acrylic acid | 2 |
| Di-tert-butylhydroperoxide | 8 |

After termination of the dropwise addition, the system was allowed to age for 30 minutes at 130˚C, to provide an acrylic resin No.1 having an acid value of 16 mgKOH/g, a hydroxyl value of 122 mgKOH/g, a weight-average molecular weight of 12,000 and a solid content of 60%.

Production Examples 2-7:

Production of acrylic resin Nos.2-7

Repeating the procedures of Production Example 1 except that the monomeric mixtures of the composition as shown in Table 1 were used, acrylic resins No.2-No.7 were obtained.

Table 1

| Composition | | Production Example 1 | Production Example 2 | Production Example 3 | Production Example 4 | Production Example 5 | Production Example 6 | Production Example 7 |
|---|---|---|---|---|---|---|---|---|
| | Acrylic resin | No. 1 | No. 2 | No. 3 | No. 4 | No. 5 | No. 6 | No. 7 |
| | Styrene | 25 | 25 | 35 | 25 | 25 | 30 | 25 |
| | Methyl methacrylate | 10 | | | 10 | 10 | 10 | 10 |
| | n-Butyl acrylate | 5 | 10 | 11 | 5 | 5 | 5 | 5 |
| | Isobutyl methacrylate | 18 | 18 | 18 | 30 | 18 | 25 | 13 |
| | 4-Hydroxybutyl acrylate | 5 | | 14 | 5 | 5 | | 20 |
| | FM-3 (note 1) | 15 | 20 | | | 15 | 14 | |
| | 2-Hydroxyethyl acrylate | | | | | 15 | | |
| | 2-Hydroxyethyl methacrylate | | | | 3 | | | |
| | 2-Hydroxypropyl acrylate | 15 | 10 | 5 | 15 | | 14 | 5 |
| | 2-Hydroxypropyl methacrylate | 5 | 15 | 15 | 5 | 5 | | 20 |
| | Acrylic acid | 2 | 2 | 2 | 2 | 2 | 2 | 2 |
| | Di-tert-butylhydroperoxide | 8 | 8 | 8 | 8 | 8 | 8 | 8 |
| Property Values | Solid content (%) | 60 | 60 | 60 | 60 | 60 | 60 | 60 |
| | Acid value (mgKOH/g) | 16 | 16 | 16 | 16 | 16 | 16 | 16 |
| | Hydroxyl value (mgKOH/g) | 122 | 125 | 135 | 118 | 129 | 77 | 177 |
| | Weight-average molecular weight (Mw) | 12,000 | 12,000 | 12,000 | 12,000 | 12,000 | 12,000 | 12,000 |

(note 1) FM-3™: Daicel Chemical Industries, Ltd., ε-caprolactone-modified vinyl monomer of 2-hydroxyethyl acrylate

Production Example 8:

Production of oligomer No.1

A reactor equipped with a stirrer, cooler, temperature-regulator, nitrogen inlet pipe and a dropping funnel was charged with 296 parts of dimethylolbutanoic acid, the inside atmosphere was replaced with nitrogen, and the content was heated to 120°C. Then 490 parts of Cardula™ E10 was added dropwise, consuming 2 hours. Maintaining the temperature of 120°C, the reaction was terminated at the point when the acid value dropped to no higher than 9. Thus obtained oligomer No.1 had a solid content of 98%, a Gardner viscosity (20°C) of $Z_6$ $Z_7$, hydroxyl value or 428 mgKOH/g, a number-average molecular weight of 600 and a weight-average molecular weight of 610.

Example 1:

Production of clear paint No.1

Sixty (60) parts (solid content) of acrylic resin No.1, 40 parts (solid content) of Desmodur™ N3300 [note 2)] and 10 parts of oligomer No.1 were mixed and the mixture's viscosity was adjusted to 50 seconds (Ford cup # 4/20°C) to provide clear paint No.1.

Examples 2 and 3:

Production of clear paint Nos.2-3

Clear paint Nos. 2 and 3 were obtained in the manner similar to Example 1, except that the respective composition was varied to those shown in Table 2.

Comparative Example 1-4:

Production of clear paint Nos.4-7

Clear paint Nos. 4-7 were obtained in the manner similar to Example 1, except that the respective composition was varied to those as shown in Table 2.

Table 2

| | | Example 1 | Example 2 | Example 3 | Comparative Example 1 | Comparative Example 2 | Comparative Example 3 | Comparative Example 4 |
|---|---|---|---|---|---|---|---|---|
| Clear paint | | No. 1 | No. 2 | No. 3 | No. 4 | No. 5 | No. 6 | No. 7 |
| Acrylic resin (A) | 60% Acrylic resin No. 1 | 60 | | | | | | |
| | 60% Acrylic resin No. 2 | | 60 | | | | | |
| | 60% Acrylic resin No. 3 | | | 60 | | | | |
| | 60% Acrylic resin No. 4 | | | | 60 | | | |
| | 60% Acrylic resin No. 5 | | | | | 60 | | |
| | 60% Acrylic resin No. 6 | | | | | | 60 | |
| | 60% Acrylic resin No. 7 | | | | | | | 60 |
| Curing agent (B) (note | Desmodur™ N3300 2) | 40 | 40 | 40 | 40 | 40 | 40 | 40 |
| Oligomer (C) | Oligomer No. 1 | 10 | 10 | 10 | 10 | 10 | 10 | 10 |
| (note 2) Desmodur™ N3300: Sumika Bayer Urethane Co., Ltd., isocyanurate type hexamethylene diisocyanate | | | | | | | | |

Preparation of test panels

Onto a degreased ABS resin flat plate (70 × 150 × 3 mm), Soflex™ #400 (Kansai Paint, metallic primer) was applied to a thickness of 15 μm, and set for 7 minutes at room temperature. Then clear paint Nos. 1-7 each was applied and baked and cured under the conditions of 70˚C - 20 minutes, to provide test panels No.1-No.7.
The test was conducted under the following conditions. The results were as shown in Table 3.

Table 3

| TEST RESULT | | | | | | | |
|---|---|---|---|---|---|---|---|
| | | Example 1 | Example 2 | Example 3 | Comparative Example 1 | Comparative Example 2 | Comparative Example 3 | Comparative Example 4 |
| | Test panel | No. 1 | No. 2 | No. 3 | No. 4 | No. 5 | No. 6 | No. 7 |
| Result | Pot life of clear paint (note 3) | ○ | ○ | ○ | ○ | × | ○ | × |
| | Gel fraction ratio (note 4) | 94 | 94 | 94 | 68 | 95 | 76 | 92 |
| | Pencil hardness of paint film (note 5) | H | H | H | 2B | H | B | H |
| | Tackiness of paint film (note 6) | ○ | ○ | ○ | × | ○ | △ | ○ |
| | Adherability (note 7) | ○ | ○ | ○ | △ | × | × | ○ |
| | Finished appearance (note 8) | ○ | ○ | ○ | ○ | ○ | ○ | △ |

(note 3) Pot life of clear paint:

Each of the clear paints was stored for 5 hours at 20˚C, and then applied onto a cold-finished mild steel plate to a film thickness of 40-50 $\mu$m and cured by baking at 70˚C for 20 minutes. Condition of the cured film (transparency, presence of humps and finished appearance) was visually observed and evaluated by the following standard:

○: no abnormality
×: abnormality observed in paint film

(note 4) Gel fraction ratio:

Each of clear paint No.1-No.7 was applied onto the test panel to a film thickness of 40 $\mu$m and baked at 70˚C for 20 minutes. The paint film was then peeled off by amalgam method, cut to a fixed size (5 $\times$ 5 cm) and weighed ($W_1$). The film was then immersed in an organic solvent (acetone) for 24 hours (20˚C), air-dried and the weight ($W_2$) of the film after the solvent extraction was measured. Gel fraction ratio (%) was calculated following the equation:

$$\text{gel fraction ratio (\%)} = (W_2 / W_1) \times 100$$

(note 5) Pencil hardness of paint film:

Pencil hardness of the paint film on each test panel applied with the base color paint and each of the clear paints was measured following the method as prescribed by JIS K 5400 8.4.2.

(note 6) Tackiness of paint film:

Extent of surface tackiness was evaluated by touching with the finger:

○: not tacky
Δ: slightly tacky but no fingerprint left on the surface
×: tacky and fingerprint was left on the surface.

(note 7) Adherability:

Following the method as prescribed by JIS K 5400 8.5.2, 1 mm$\times$ 1 mm chekerboard pattern tape adhesion test was conducted:

○: not peeling off
Δ: local peeling
×: whole surface peeling

(note 8) Finished appearance:

Finished appearance was visually evaluated based on the following standard:

○: good
Δ: round feeling and gloss unevenness
×: heavy round feeling and surface roughening.

**Claims**

1. A paint film forming method comprising applying color base paint onto rigid resin parts and then clear paint and curing the two paint films, which is **characterized by** using, as said clear paint, a clear paint comprising 60-90% by weight of a hydroxyl-containing acrylic resin (A) and 10-40% by weight of a polyisocyanate compound curing agent (B), based on the combined solid content of the acrylic resin (A) and the curing agent (B),

said acrylic resin (A) having a hydroxyl value of 80-160 mgKOH/g and being prepared by radical-copolymerizing, based on the combined amount of the monomers (a), (b) and (c): (a) 8-30% by weight of a primary hydroxyl-containing monomer selected from 4-hydroxybutyl (meth)acrylate monomers and ε-caprolactone-modified vinyl monomers obtained by ring-opening polymerization of ε-caprolactone with hydroxyalkyl (meth)acrylate; (b) 10-40% by weight of secondary hydroxyl-containing monomer; and (c) 30-82% by weight of still other polymerizable unsaturated monomer, the clear paint further containing 1-20 % by weight of hydroxyl-containing oligomer (C) which is a reaction product of a carboxyl-containing compound with an epoxy-containing compound, which has at least the hydroxyl group(s) formed by ring-opening esterification reaction between the carboxyl group(s) of the carboxyl-containing compound and the epoxy group(s) of the epoxy-containing compound used in the reaction, and which has at least two hydroxyl groups per molecule and a weight average molecular weight within a range not higher than 1,000, based on the combined solid content of the acrylic resin (A) and the curing agent (B).

2. The method according to Claim 1, in which the color base paint is one-package color base paint comprising polyester polyol having a hydroxyl value of 40-120 and aliphatic and/or alicyclic blocked polyisocyanate which is formed by blocking hydroxy compound-modified isocyanurate type polyisocyanate with dialkyl malonate and acetoacetic acid ester.

3. The method according to Claim 1, in which the hydroxyl-containing acrylic resin (A) has a hydroxyl value within a range of 100-140 mgKOH/g.

4. The method according to Claim 1, in which the hydroxyl-containing acrylic resin (A) has a weight-average molecular weight within a range of 5,000-20,000.

5. The method according to Claim 1, in which the hydroxyl-containing acrylic resin (A) has an acid value within a range of 0-40 mgKOH/g.

6. The method according to Claim 1, in which said ε-caprolactone-modified vinyl monomer is represented by the following formula (I):

$$CH_2 = C(R^1)\text{-}COO\text{-}R^2\text{-}O(COC_5H_{10}O)nH \qquad (I)$$

wherein

$R^1$ is hydrogen or methyl,
$R^2$ is $C_2$-$C_6$, in particular, $C_2$-$C_3$ alkylene, and
n is an integer of 1-10, preferably 1-5.

7. The method according to Claim 6, in which $R^1$ is hydrogen and $R^2$ is ethylene.

8. The method according to Claim 1, in which the secondary hydroxyl-containing monomer (b) is selected from the group consisting of 2-hydroxypropyl (meth)acrylate, 2-hydroxybutyl (meth)acrylate, 3-hydroxybutyl (meth)acrylate and adducts of (meth)acrylic acid with an epoxy-containing compound.

9. The method according to Claim 1, in which the secondary hydroxyl-containing monomer (b) is 2-hydroxypropyl (meth)acrylate.

10. The method according to Claim 1, in which other polymerizable unsaturated monomer (c) is selected from the group consisting of styrene, alkyl esters of (meth)acrylic acid and (meth)acrylic acid.

11. The method according to Claim 1, in which the hydroxyl-containing acrylic resin (A) is obtained by radical copolymerizing 10-25% by weight of the monomer (a), 15-35% by weight of the monomer (b) and 40-75% by weight of the monomer (c).

12. The method according to Claim 1, in which the curing agent (B) is a blocked polyisocyanate compound.

13. The method according to Claim 1, in which the clear paint contains the acrylic resin (A) and the curing agent (B) at the ratio of, based on the combined solid content of the two, 65-85% by weight of the acrylic resin (A) and 15-35% by weight of the curing agent (B).

14. The method according to Claim 1, in which the hydroxyl-containing oligomer (C) has a hydroxyl value within a range of 200-800 mgKOH/g.

15. The method according to Claim 1, in which the hydroxyl-containing oligomer (C) has a weight-average molecular weight of 200-850.

16. The method according to Claim 1, in which the curing of the both paint films of the color base paint and clear paint is conducted by 2-coat-1bake system or 2-coat-2-bake system.

17. The method according to Claim 1, in which the curing is conducted at temperatures of 60-70˚C.

18. A clear paint comprising 60-90% by weight of a hydroxyl-containing acrylic resin (A) and 10-40% by weight of a polyisocyanate compound curing agent (B), based on the combined solid content of the acrylic resin (A) and the curing agent (B),
said acrylic resin (A) having a hydroxyl value of 80-160 mgKOH/g and being prepared by radical-copolymerizing, based on the combined amount of the monomers (a), (b) and (c): (a) 8-30% by weight of a primary hydroxyl-containing monomer selected from 4-hydroxybutyl (meth)acrylate monomers and ε-caprolactone-modified vinyl monomers obtained by ring-opening polymerization of ε-caprolactone with hydroxyalkyl (meth)acrylate; (b) 10-40% by weight of secondary hydroxyl-containing monomer; and (c) 30-82% by weight of still other polymerizable unsaturated monomer, the clear paint further containing 1-20 % by weight of hydroxyl-containing oligomer (C) which is a reaction product of a carboxyl-containing compound with an epoxy-containing compound, which has at least the hydroxyl group(s) formed by ring-opening esterification reaction between the carboxyl group(s) of the carboxyl-containing compound and the epoxy group(s) of the epoxy-containing compound used in the reaction, and which has at least two hydroxyl groups per molecule and a weight average molecular weight within a range not higher than 1,000, based on the combined solid content of the acrylic resin (A) and the curing agent (B).

19. Painted goods obtained by the method as described in Claim 1.

**Patentansprüche**

1. Anstrichmittelfilm-Bildungsverfahren umfassend das Aufbringen eines Farbenbasis-Anstrichmittels auf starre Harzteile und anschließend eines klaren Anstrichmittels und das Härten der zwei Anstrichmittelfilme, welches **gekennzeichnet ist durch** das Verwenden, als das klare Anstrichmittel, eines klaren Anstrichmittels, umfassend 60-90 Gew.-% eines Hydroxyl enthaltenden Acrylharzes (A) und 10-40 Gew.-% eines Polyisocyanatverbindung-Härtungsmittels (B), bezogen auf den kombinierten Feststoffgehalt von Acrylharz (A) und Härtungsmittel (B), wobei das Acrylharz (A), das eine Hydroxylzahl von 80-160 mg KOH/g aufweist und **durch** radikalische Copolymerisation von, bezogen auf die kombinierte Menge der Monomere (a), (b) und (c): (a) 8-30 Gew.-% eines primäres Hydroxyl enthaltenden Monomers, ausgewählt aus 4-Hydroxybutyl(meth)acrylatMonomeren und ε-Caprolacton-modifizierten Vinylmonomeren, erhalten **durch** Ringöffnungspolymerisation von ε-Caprolacton mit Hydroxyalkyl (meth)acrylat; (b) 10-40 Gew.-% sekundäres Hydroxyl enthaltendes Monomer; und (c) 30-82 Gew.-% noch anderens polymerisierbares ungesättigtes Monomer; hergestellt wird, wobei das klare Anstrichmittel weiterhin 1-20 Gew.-% Hydroxyl enthaltendes Oligomer (C), das ein Reaktionsprodukt einer Carboxyl enthaltenden Verbindung mit einer Epoxy enthaltenden Verbindung ist, welches zumindest die Hydroxylgruppe(n) **durch** Ringöffnungsveresterungsreaktion zwischen der/den Carboxylgruppe(n) der Carboxyl enthaltenden Verbindung und der/den Epoxygruppe(n) der Epoxy enthaltenden Verbindung, die in der Reaktion verwendet werden, gebildet aufweist und mindestens zwei Hydroxylgruppen pro Molekül und ein gewichtsmittleres Molekulargewicht innerhalb eines Bereichs von nicht höher als 1000 hat, bezogen auf den kombinierten Feststoffgehalt von Acrylharz (A) und Härtungsmittel (B), enthält.

2. Verfahren gemäß Anspruch 1, in welchem das Farbenbasis-Anstrichmittel ein Einkomponenten-Farbenbasis-Anstrichmittel ist, umfassend Polyesterpolyol mit einer Hydroxylzahl von 40-120 und aliphatisch und/oder alicyclisch blockiertem Polyisocyanat, welches gebildet wird durch Blockieren eines Polyisocyanats vom Hydroxyverbindung-modifizierten Isocyanurattyp mit Dialkylmalonat und Acetessigester.

3. Verfahren gemäß Anspruch 1, in welchem das Hydroxyl enthaltende Acrylharz (A) eine Hydroxylzahl innerhalb eines Bereichs von 100-140 mg KOH/g hat.

4. Verfahren gemäß Anspruch 1, in welchem das Hydroxyl enthaltende Acrylharz (A) ein gewichtsmittleres Molekulargewicht innerhalb eines Bereichs von 5.000 bis 20.000 hat.

5. Verfahren gemäß Anspruch 1, in welchem das Hydroxyl enthaltende Acrylharz (A) eine Säurezahl innerhalb eines Bereichs von 0-40 mg KOH/g aufweist.

6. Verfahren gemäß Anspruch 1, in welchem das $\varepsilon$-Caprolactonmodifizierte Vinylmonomer durch die folgende Formel (I) dargestellt wird:

$$CH_2=C(R^1)\text{-}COO\text{-}R^2\text{-}O(COC_5H_{10}O)nH \qquad (I)$$

worin

R$^2$ Wasserstoff oder Methyl ist,
R$^2$ C$_2$-C$_6$-, insbesondere C$_2$-C$_3$-Alkylen ist und
n eine ganze Zahl von 1 bis 10, vorzugsweise von 1-5 ist.

7. Verfahren gemäß Anspruch 6, in welchem R$^1$ Wasserstoff ist und R$^2$ Ethylen ist.

8. Verfahren gemäß Anspruch 1, in welchem das sekundäres Hydroxyl enthaltende Monomer (b) ausgewählt ist aus der Gruppe, bestehend aus 2-Hydroxypropyl(meth)acrylat, 2-Hydroxybutyl(meth)acrylat, 3-Hydroybutyl(meth)acrylat und Addukten von (Meth)Acrylsäure mit einer Epoxy enthaltenden Verbindung.

9. Verfahren gemäß Anspruch 1, in welchem das sekundäres Hydroxyl enthaltende Monomer (b) 2-Hydroxypropyl (meth)acrylat ist.

10. Verfahren gemäß Anspruch 1, in welchem das andere polymerisierbare ungesättigte Monomer (c) ausgewählt ist aus der Gruppe, bestehend aus Styrol, Alkylestern von (Meth)Acrylsäure und (Meth)Acrylsäure.

11. Verfahren gemäß Anspruch 1, in welchem das Hydroxyl enthaltende Acrylharz (A) erhalten wird durch radikalische Copolymerisation von 10-25 Gew.-% des Monomers (a), 15-35 Gew.-% des Monomers (b) und 40-75 Gew.-% des Monomers (c).

12. Verfahren gemäß Anspruch 1, in welchem das Härtungsmittel (B) eine blockierte Polyisocyanatverbindung ist.

13. Verfahren gemäß Anspruch 1, in welchem das klare Anstrichmittel das Acrylharz (A) und das Härtungsmittel (B) in einem Verhältnis von, bezogen auf den kombinierten Feststoffgehalt der beiden, 65-85 Gew.-% des Acrylharzes (A) und 15-35 Gew.-% des Härtungsmittels (B) enthält.

14. Verfahren gemäß Anspruch 1, in welchem das Hydroxyl enthaltende Oligomer (C) eine Hydroxylzahl innerhalb eines Bereichs von 200-800 mg KOH/g hat.

15. Verfahren gemäß Anspruch 1, in welchem das Hydroxyl enthaltende Oligomer (C) ein gewichtsmittleres Molekulargewicht von 200-850 hat.

16. Verfahren gemäß Anspruch 1, in welchem die Härtung der beiden Anstrichmittelfilme aus dem Farbenbasis-Anstrichmittel und dem klaren Anstrichmittel mittels eines Zwei-Schichteneinmal-Härten-Systems oder Zwei-Schichten-zweimal-Härten-Systems durchgeführt wird.

17. Verfahren gemäß Anspruch 1, in welchem das Härten bei Temperaturen von 60-70˚C durchgeführt wird.

18. Klares Anstrichmittel, umfassend 60-90 Gew.-% eines Hydroxyl enthaltenden Acrylharzes (A) und 10-40 Gew.-% eines Polyisocyanatverbindung-Härtungsmittels (B), bezogen auf den kombinierten Feststoffgehalt von Acrylharz (A) und Härtungsmittel (B), wobei das Acrylharz (A), das eine Hydroxylzahl von 80-160 mg KOH/g aufweist und durch radikalische Copolymerisation von, bezogen auf die kombinierte Menge der Monomere (a), (b) und (c): (a) 8-30 Gew.-% eines primäres Hydroxyl enthaltenden Monomers, ausgewählt aus 4-Hydroxybutyl(meth)acrylatMonomeren und $\varepsilon$-Caprolacton- modifizierten Vinylmonomeren, erhalten durch Ringöffnungspolymerisation von $\varepsilon$-Caprolacton mit Hydroxyalkyl(me-

th)acrylat; (b) 10-40 Gew.-% sekundäres Hydroxyl enthaltendes Monomer; und (c) 30-82 Gew.-% noch anderes polymerisierbares ungesättigtes Monomer; hergestellt wird, wobei das klare Anstrichmittel weiterhin 1-20 Gew.-% Hydroxyl enthaltendes Oligomer (C), das ein Reaktionsprodukt einer Carboxyl enthaltenden Verbindung mit einer Epoxy enthaltenden Verbindung ist, welches zumindest die Hydroxylgruppe(n) durch Ringöffnungsveresterungsreaktion zwischen der/den Carboxylgruppe(n) der Carboxyl enthaltenden Verbindung und der/den Epoxygruppe(n) der Epoxy enthaltenden Verbindung, die in der Reaktion verwendet werden, gebildet aufweist und mindestens zwei Hydroxylgruppen pro Molekül und ein gewichtsmittleres Molekulargewicht innerhalb eines Bereichs von nicht höher als 1000 hat, bezogen auf den kombinierten Feststoffgehalt von Acrylharz (A) und Härtungsmittel (B), enthält.

**19.** Angestrichene Gegenstände, erhalten mittels des Verfahrens, das in Anspruch 1 beschrieben wird.

### Revendications

1. Méthode de formation d'un film de peinture comprenant l'application d' une peinture de base colorée sur des pièces rigides en résine et ensuite d'une peinture claire et le durcissement des deux films de peinture **caractérisé en ce que** l'on utilise en tant que peinture claire une peinture claire comprenant 60-90% en poids d'une résine acrylique contenant des groupes hydroxyles (A) et 10-40% en poids d'un composé de polyisocyanate en tant qu'agent durcissant (B) sur la base de la teneur solide totale de la résine acrylique (A) et l'agent durcissant (B);

la résine acrylique (A) ayant un indice hydroxyle de 80 à 160 mgKOH/g et étant préparée par polymérisation radicalaire, sur la base de la quantité totale des monomères (a), (b) et (c),: de (a) 8 à 30% en poids d'un monomère contenant un groupe hydroxyle primaire choisi parmi les monomères de 4-hydroxybutyl (méth)acrylate et les mo-nomères vinyliques modifiés par $\varepsilon$-caprolactone obtenus par polymérisation par ouverture de cycle du $\varepsilon$-caprolactone avec l'hydroxyalkyle (méth)acrylate; (b) 10-40% en poids d'un monomère contenant un groupe hydroxyle secondaire et (c) 30-82% en poids d'un autre monomère polymérisable insaturé;

la peinture claire contenant en outre 1-20% en poids d'un oligomère contenant des groupes hydroxyles (C) qui est le produit de la réaction entre un composé contenant un groupe carboxyle et un composé contenant un groupe époxy et qui a au moins le(s) groupe(s) hydroxyle(s), formé(s) par la réaction de l'estérification par ouverture de cycle entre le(s) groupe(s) carboxyle(s) du composé contenant un groupe carboxyle et le(s) groupe(s) époxy(s) du composé contenant un groupe époxy utilisé dans la réaction et qui a au moins deux groupes hydroxyles par molécule et un poids moléculaire moyen pondéral non supérieur à 1000 sur la base de la teneur solide totale de la résine acrylique (A) et de l'agent durcissant (B).

2. La méthode selon la revendication 1, dans laquelle la peinture de base colorée est une peinture de base colorée à un constituant comprenant polyester polyol ayant un indice hydroxyle de 40-120 et un polyisocyanate bloqué aliphatique et/ou alicyclique qui est formé en bloquant un polyisocyanate du type isocyanurate modifié par un composé hydroxylé avec dialkyle malonate et ester acétylacétate.

3. La méthode selon la revendication 1, dans laquelle la résine contenant des groupes hydroxyles (A) a un indice hydroxyle dans la gamme de 100-140 mgKOH/g.

4. La méthode selon la revendication 1, dans laquelle la résine acrylique contenant des groupes hydroxyles (A) a un poids moléculaire moyen pondéral dans la gamme de 5,000-20,000.

5. La méthode selon la revendication 1, dans laquelle la résine acrylique contenant des groupes hydroxyles (A) a un indice d'acide dans la gamme de 0-40 mgKOH/g.

6. La méthode selon la revendication 1, dans laquelle le monomère vinylique modifié par $\varepsilon$-caprolactone est représenté par la formule (I) suivante:

$$CH_2=C(R^1)\text{-}COO\text{-}R^2\text{-}O(COC_5H_{10}O)nH \qquad (I)$$

dans laquelle

$R^1$ représente un atome d'hydrogène ou un groupe méthyle,
$R^2$ représente un groupe alcényle en $C_2$-$C_6$, en particulier $C_2$-$C_3$, et
n représente un nombre entier de 1-10, en particulier de 1-5.

**7.** La méthode selon la revendication 6, dans laquelle R$^1$ est un atome d'hydrogène et R$^2$ est éthylène.

**8.** La méthode selon la revendication 1, dans laquelle le monomère contenant un groupe hydroxyle secondaire (b) est choisi parmi le groupe consistant en 2-hydroxypropyl (méth)acrylate, 2-hydroxybutyl (méth)acrylate, 3-hydroxybutyl (méth)acrylate et adducts de l'acide (méth)acrylique avec un composé d'époxyde.

**9.** La méthode selon la revendication 1, dans laquelle le monomère contenant un groupe hydroxyle secondaire (b) est le 2-hydroxypropyl (méth)acrylate.

**10.** La méthode selon la revendication 1, dans laquelle l'autre monomère polymérisable insaturé (c) est choisi parmi le groupe consistant en styrène, (méth)acrylates d'alkyle et acide (méth)acrylique.

**11.** La méthode selon la revendication 1, dans laquelle la résine acrylique contenant des groupes hydroxyles (A) est obtenue par copolymérisation radicalaire de 10-25 % en poids du monomère (a), 15-35% en poids du monomère (b) et 40-75% en poids du monomère (c).

**12.** La méthode selon la revendication 1, dans laquelle l'agent durcissant (B) est un composé de polyisocyanate bloqué.

**13.** La méthode selon la revendication 1, dans laquelle la peinture claire contient la résine acrylique (A) et l'agent durcissant (B) en une proportion de 65-85% en poids de la résine acrylique (A) et 15-35% en poids de l'agent durcissant (B) sur la base de la teneur solide totale des deux.

**14.** La méthode selon la revendication 1, dans laquelle l'oligomère contenant des groupes hydroxyles (C) a un indice hydroxyle dans la gamme de 200-800 mgKOH/g.

**15.** La méthode selon la revendication 1, dans laquelle l'oligomère contenant des groupes hydroxyles (C) a un poids moléculaire moyen pondéral de 200-850.

**16.** La méthode selon la revendication 1, dans laquelle le durcissement des deux films de peinture de la peinture de base colorée et de la peinture claire est effectué par un système des 2couches/1cuisson ou un système des 2couches/2cuissons.

**17.** La méthode selon la revendication 1, dans laquelle le durcissement est effectué aux températures de 60-70°.

**18.** Une peinture claire comprenant 60-90% en poids d'une résine acrylique (A) et 10-40% en poids d'un composé de polyisocyanate en tant qu'agent durcissant (B) sur la base de la teneur solide totale de la résine acrylique (A) et de l'agent durcissant (B),
la résine acrylique (A) ayant un indice hydroxyle de 80 à 160 mgKOH/g et étant préparée par polymérisation radicalaire, sur la base de la quantité totale des monomères (a), (b) et (c),.: de (a) 8 à 30% en poids d'un monomère contenant un groupe hydroxyle primaire choisi parmi les monomères de 4-hydroxybutyl (méth)acrylate et les monomères vinyliques modifiés par ε-caprolactone obtenus par polymérisation par ouverture de cycle du ε-caprolactone avec l'hydroxyalkyle (méth)acrylate; (b) 10-40% en poids d'un monomère contenant un groupe hydroxyle secondaire et (c) 30-82% en poids d'un autre monomère polymérisable insaturé;
la peinture claire contenant en outre 1-20% en poids d'un oligomère contenant des groupes hydroxyles (C) qui est le produit de la réaction entre un composé contenant un groupe carboxyle et un composé contenant un groupe époxy et qui a au moins le(s) groupe(s) hydroxyle(s), formé(s) par la réaction de l'estérification par ouverture de cycle entre le(s) groupe(s) carboxyle(s) du composé contenant un groupe carboxyle et le(s) groupe(s) époxy(s) du composé contenant un groupe époxy utilisé dans la réaction et qui a au moins deux groupes hydroxyles par molécule et un poids moléculaire moyen pondéral non supérieur à 1000 sur la base de la teneur solide totale de la résine acrylique (A) et de l'agent durcissant (B).

**19.** Articles peints obtenus par la méthode telle que définie dans la revendication 1.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002326051 A